(19) Europäisches Patentamt / European Patent Office / Office européen des brevets

(11) **EP 2 502 977 B1**

(12) # EUROPÄISCHE PATENTSCHRIFT


(45) Veröffentlichungstag und Bekanntmachung des Hinweises auf die Patenterteilung:
**19.08.2015 Patentblatt 2015/34**

(51) Int Cl.:
***C11B 1/00*** *(2006.01)*
***G01N 21/51*** *(2006.01)*
***G01N 21/85*** *(2006.01)*
***G01N 13/02*** *(2006.01)*
***B01F 15/06*** *(2006.01)*

(21) Anmeldenummer: **11159276.2**

(22) Anmeldetag: **22.03.2011**


(54) **Malaxierverfahren und -vorrichtung**

Malaxation method and device

Procédé et dispositif de malaxage


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.09.2012 Patentblatt 2012/39**



(73) Patentinhaber: **GEA Mechanical Equipment GmbH**
**59302 Oelde (DE)**

(72) Erfinder: **Hruschka, Steffen**
**59302 Oelde (DE)**

(74) Vertreter: **Specht, Peter et al**
**Loesenbeck - Specht - Dantz**
**Patent- und Rechtsanwälte**
**Am Zwinger 2**
**33602 Bielefeld (DE)**



(56) Entgegenhaltungen:
**DE-A1- 2 924 736**
**DE-A1- 3 337 403**
**ES-A1- 2 224 855**
**ES-A1- 2 329 536**
**US-A- 3 589 834**

- **BOSELLI E ET AL: "Are virgin olive oils obtained below 27<o>C better than those produced at higher temperatures?", LEBENSMITTEL WISSENSCHAFT UND TECHNOLOGIE, ACADEMIC PRESS, LONDON, GB, Bd. 42, Nr. 3, 1. April 2009 (2009-04-01), Seiten 748-757, XP025840680, ISSN: 0023-6438, DOI: DOI: 10.1016/J.LWT.2008.09.018 [gefunden am 2008-10-10]**
- **FURFERI ET AL: "Artificial neural network software for real-time estimation of olive oil qualitative parameters during continuous extraction", COMPUTERS AND ELECTRONICS IN AGRICULTURE, ELSEVIER, Bd. 55, Nr. 2, 9. Februar 2007 (2007-02-09), Seiten 115-131, XP005876039, ISSN: 0168-1699, DOI: DOI: 10.1016/J.COMPAG.2006.12.006**
- **SONIA ESPOSTO; GIANFRANCESCO MONTEDORO; ROBERTO SELVAGGINI; IBANEZ RICCO; AGNESE TATICCHI; STEFANIA URBANI; MAURIZIO SERVILI: "Monitoring of virgin olive oil volatile compounds evolution during olive malaxation by an array of metal oxide sensors", FOOD CHEMISTRY, Bd. 113, Nr. 1, 1. März 2009 (2009-03-01), Seiten 345-350, XP000002657041,**


EP 2 502 977 B1


Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).


Printed by Jouve, 75001 PARIS (FR)

## Beschreibung

Die Erfindung betrifft ein Verfahren zum Aufschließen einer Maische, insbesondere einer Olivenmaische, durch Malaxieren.

Ein solches Verfahren ist aus der ES 2 224 855 A1 bekannt. Zum technologischen Hintergrund werden ferner die ES 2 329 536 A1 und die US 3 589 834 A1 sowie der Artikel BOSELLI E ET AL: "Are virgin olive oils obtained below 27C better than those produced at higher temperatures?", LEBENSMITTEL WISSENSCHAFT UND TECHNOLOGIE, ACADEMIC PRESS, LONDON, GB, Bd. 42, Nr. 3, 1. April 2009 (2009-04-01), Seiten 748-757, XP025840680, ISSN: 0023-6438, DOI: DOI:10.1016/J.LWT.2008.09.018 [gefunden am 2008-10-10], genannt.

Bei der Olivenölgewinnung werden geerntete Oliven - wenn notwendig - zunächst von Zweigen und Laub befreit und gewaschen, um Sand und Schmutz zu entfernen. Die gewaschenen Oliven werden sodann in einer Mühle zu einem Brei, der Maische, zerkleinert. Nach dem darauffolgenden Malaxieren wird das Olivenöl abgetrennt, beispielsweise im Zentrifugalfeld, so z.B. in einem 2-Phasen-Dekanter, der die Maische in Öl sowie Trester und Wasser trennt.

Unter einem Aufschließen durch Malaxieren im Sinne der vorliegenden Erfindung wird verstanden, dass in einem oder mehreren mit Maische gefüllten Behälter(n) Wärmebedingungen erzeugt werden, bei denen die fruchteigenen Enzyme und ggf. auch zugesetzte Enzyme die Zellwände aufweichen. Dabei wird die Masse so bewegt, dass die Zellen aufgerissen werden (Öl-Wasseremulsion), bis schließlich die frei gewordenen Öltröpfchen eine kontinuierliche Phase oder zumindest eine Wasser-Iölemulsion bilden. Die Maische wird dazu in einem Mixer mit Heizeinrichtung, dem Malaxeur, gerührt und erwärmt bzw. auf eine gewünschte Temperatur gebracht und auf dieser gehalten.

Eine Kaltpressung darf bis zu 27 Grad Celsius erwärmt werden. Niedrigere Qualitätskategorien dürfen dagegen auf höhere Temperaturen, vorzugsweise zwischen 30 und 45 Grad Celsius, gebracht werden.

Malaxeure sind in verschiedener Bauart bekannt, so in offener und geschlossener Bauweise und werden entweder kontinuierlich oder im Batchbetrieb betrieben.

Eine zu lange Malaxierzeit kann zu unerwünschten Aromakomponenten führen. Das bedeutet, dass das Malaxierkonzept technisch so umgesetzt werden muss, dass beim Malaxieren der möglichst optimale Zeitpunkt gefunden wird, an dem einerseits die Ölfreisetzung genügend weit fortgeschritten ist (z.B., nach einer % h bis zu 2h), um das Öl mit guter Ausbeute abseparieren zu können und andererseits die Qualität des Öls durch das Malaxieren, möglichst wenig beeinträchtigt wird.

Vor diesem Hintergrund ist es die Aufgabe der Erfindung, ein verbessertes Verfahren zum Malaxieren einer ölhaltigen Maische, insbesondere einer Olivenmaische, zu schaffen.

Die Erfindung löst diese Aufgabe in Hinsicht auf das Verfahren durch den Gegenstand des Anspruchs 1. Das Merkmal c) des Anspruchs 1 umfasst dabei sowohl Wasser- in Ölemulsionen als auch Öl- in Wasseremulsionen.

Nach dem Kennzeichen des Anspruchs werden wiederholt mit einer Kamera optische Aufnahmen der Maischeobertläche, getätigt. Sodann erfolgt ein Vergleich aufeinander folgender Aufnahmen erfolgt. Es wird der Anteil an mit Öl bedeckter Fläche (AFS) in der Maische anhand des Vergleichs bestimmt und ferner eine ggf. eingetretene Veränderung des Anteils an mit Öl bedeckter Fläche (AFS) in Abhängigkeit von der Malaxierzeit bei dem Vergleich bestimmt, wobei die aufgenommenen Bilder auf wenigstens einem mit der Kamera verbundenen Bildschirm angezeigt werden, wobei der Bildschirm in wenigstens zwei oder mehr Teilbildschirme unterteilt wird, auf denen gleichzeitig jeweils zeitlich und/oder örtlich versetzt zueinander aufgenommene Bilder der Oberfläche der Maische ausgegeben werden, oder wobei die aufgenommenen Bilder auf wenigstens zwei oder mehr Bildschirmen (4) angezeigt werden, wobei auf den Bildschirmen gleichzeitig jeweils zeitlich und/oder örtlich versetzt zueinander aufgenommene Bilder der Oberfläche der Maische ausgegeben werden.

Dies hat folgenden Hintergrund. Die einzelnen Zellen der Olive sind ca. 5 μm, groß, wobei die darin enthaltenen Öltröpfchen in der Regel eine Größe von ca. 1 μm aufweisen. Um diese Öltröpfchen insbesondere im Zentrifugalfeld abtrennen zu können, sollen sich aus diesen in den Zellen enthaltenen kleinen Öltröpfchen größere Tröpfchen mit einem Durchmesser von 30 μm oder mehr bilden. Die den Prozess überwachende Person erkennt diesen Zustand beim Bedienen anhand der Ölflächenbildung an der Oberfläche Dieses Erkennen, automatisiert oder alternativ durch die Person, erleichtert die Erfindung wesentlich.

Es ist besonders einfach, dass die Aufnahmen mit einer Kamera zeitversetzt getätigt werden. Es ist aber auch eine andere Art der Aufnahme denkbar, so eine Ultraschallaufnahme oder eine Aufnahme bzw. Erfassung mit einem sonstigen optischen Maßsystem wie Lasern, wobei dann die Auswertung vorzugsweise rechnergesetzt erfolgt.

Die Aufnahmen werden mit der Kamera insbesondere gekoppelt mit einem optischen Mess- und Auswertungssystem, getätigt. Derartige Auswertungssysteme, die aus optischen Aufnahmen Farbverteltungen bestimmen, sind an sich bekannt und müssen hier nicht näher erläutert werden.

Besonders vorteilhaft ist es, anhand der Auswertung steuernd oder regelnd in die Prozessparameter des Malaxierens und/oder wenigstens einer oder mehrerer vorhergehender Prozesstufe(n) (also vor dem Malaxieren), die einen Einfluss auf den Ölaufschluss haben können (so beispielsweise der Malgrad bei einem vorhergehenden Zerkleinem, ggf. eine Wasseraugabe zur Viskositätsveränderung, ggf. - wenn möglich und/oder erwünscht eine Enzymzugabe, ggf. Talkumzufuhr usw.) einzugreifen

So ist es zweckmäßig, anhand der Auswertung die Wärmezufuhr beim Malaxiervorgang zu steuern oder zu regeln, insbesondere durch Veränderung der Heiztemperatur (Temperatur des Heizmediums) und/oder durch Veränderung der Durchflussmenge an Heizmedium.

Dabei ist es wiederum besonders vorteilhaft, die Wärmezufuhr mittels zwei verschiedener Heizungselemente zu steuern oder zu regeln.

Das erste Heizungselement ist dabei vorzugsweise ein Behälterheizungselement, mit welchem der Behälter an sich auf eine bestimmte Temperatur gebracht werden kann. Ergänzend ist es dann zweckmäßig, wenn das zweite Heizungselement ein Rührwerksbegleitheizungselement ist d.h. ein direkt dem Rührwerk zugeordnetes zweites Heizungselement, mit dem am Ort des Rührens ein weiterer Wärmeeintrag in das Produkt durchführbar ist, was hilft, den Malaxiervorgang weiter zu optimieren.

Der Malaxeur ist damit vorzugsweise ein doppelwandiger, beheizbarer Rührbehälter:

Das Heizen erfolgt bekanntemlaßeri in drei Ausführungen:

Erste Ausführung: Rührbehälter-Wasserbad:

Ein vorzugsweise doppelwandiger Behälter - auch Rührbehälter genannt - ist mit Wasser gefüllt. Durch dieses Wasser wird eine Heizschlange mit heißem Wasser geleitet, das wiederum das Wasser um Doppelmantel erwärmt. Dieses gibt dann die Energie an das Innere des Rührbehälters, der Maische. Die nach außen abgegebene Wärme des "Wasserbades" stellt einen Verlust dar.

Zweite Ausführung: Rührbehälter-Waridheizungsefement:

Durch den Mantel eines doppelwandigen Rührbehälters strömt Warmwasser, das die Energie über die innere Mantelfläche an den Olivenbrei abgibt.

Infolgedessen wird nur die innere Maritelfläche als Wärmeübergangsfläche benutzt. Die äußere Mantelfläche strahlt die Wärme in die Umgebung ab, so sie nicht isoliert ist. Ergo sind die Energieverluste höher umso geringer die Raumtemperatur ist, oder umso mehr Zugluft im Raum vorherrscht.

Im Inneren wird die Masse durch ein Rührwerk bewegt, so dass permanent die Masse an der Kontaktfläche zur Innenwand des Mantels ausgetauscht wird.

Dritte Ausführung:

Ein anderes Design von Malaxeuren ist derart ausgeführt, dass in Wannen Heizkörper eingehängt sind, die dann beidseitig die Wärme-Energie in die zu verarbeitende bzw. zu bearbeitende Masse bzw. Maische abgeben. Die Masse wird auch hier durch ein Rührorgan bewegt. Eine typische Ausführung ist derart, dass die Heizplatten senkrecht zur Rotationsachse des Rührwerkes eingehängt sind. An diesen Stellen ist das Rührwerk unterbrochen. Ein Vorteil ist die verlustärmere Wärmeübertragung beidseitig von der Platte aus in die Masse, ein Nachteil ist die schlechte Durchmischung infolge der Unterbrechung des Rührorganes. Es ist aber weniger Heizfläche erforderlich.

Eine erfindungsgemäße Variante: die Beheizung des Rührwerkes selbst, bewirkt eine deutliche Effektivitätssteigerung dadurch, dass die Wärme nicht am festen Ort sondern bewegt, vorzugsweise "dreidimensional" in die Masse bzw. Maische eingetragen wird.

Der Wärmeübergangskoeffizient wird noch dadurch erhöht, dass das beheizte Rührwerk permanent mit frischem, noch nicht hinreichend erwärmten Material in Berührung kommt Durch das gleichzeitige Heizen und die Relativbewegung des Heizorganes in der Masse wird eine deutliche Steigerung des Wärmeübergangskoeffizienten erreicht.

Die Bewegung des Rührwerkes führt zu einer Zwangsförderung der Masse. Da das Rührwerk gegen die Masseträgheit arbeitet, wird immer und permanent neues Material gegen die Rührvverksoberffäche getragen. Damit ist das bereits erwärmte Material sehr zügig relativ weit weg vom beheizten Rührorgan. Das ist anders an der Oberfläche vom Mantel oder den eingehängten Platten. Hier herrscht an der Oberfläche eine Art partieller Pfropfenströmung vor, mit deutlich geringerem Wärmeübergangskoeffizient als beim beheizten Rührwerk.

Die Beheizung des Rührwerkes oder am Rührwerk kann mit demselben oder einem anderen, separaten Heizmedium erfolgen. Die beiden Heizelemente können damit einen Teil eines Heizkreislaufs ausbilden oder auch zu zwei völlig getrennten Heizkreisläufen gehören, die lediglich gemeinsam gesteuert werden. Sinnvoll ist es dieselbe Temperatur zu haben wie das Medium des ersten Heizelements. Das erreicht man am besten dadurch, dass dieselbe Vorlauftemperatur gewählt und mit einem relativ großen Volumenstrom gearbeitet wird. Damit ist die Rücklauftemperatur nur marginal kleiner gegenüber der Vorlauftemperatur, d.h. die Heizfläche wird bezüglich des Temperaturgradienten voll ausgenutzt. Damit ist die Reglung ohne große Hysterese möglich.

Bei Verwendung eines geeigneten Behälters genügender Isolierung und bei einer entsprechenden Auslegung des Rührwerksbegleitheizungselements kann ggf. sogar auf ein direktes Behälterheizen mit der nicht beweglichen Heizungselement verzichtet werden und nur das wenigstens eine Rührwerksbegleitheizungselement eingesetzt werden, was zu einem kostengünstigen Aufbau und zu einem gleichmäßigen Wärmeeintrag führt Besonders bevorzugt erfolgt der Wärmeeintrag aber mit zwei Heizelementen, wenigstens einem bewegten Heizelement und wenigstens einem stillstehenden Heizelement, da hier die Wärmezufuhr besonders intensiv aber auch gut steuer und regelbarbar ist. Die Heizelemente können elektrisch betrieben sein oder aber mittels Durchfluss eines Wärmemediums arbeiten (Wasser oder dgl.).

Vorteilhafte weitere Ausgestaltungen der Erfindung sind in den übrigen Unteransprüchen angegeben.

Nachfolgend wird die Erfindung unter Bezug auf die Zeichnung anhand eines Ausführungsbeispiels näher beschrieben. Es zeigen:

Fig. 1a eine schematische Darstellung eines Malaxeurs mit einer Kamera und Bildschirm;

Fig. 1b eine Bildschirmoberfläche;

Fig. 2 - 4 verschiedene Diagramme zu Malaxierverfahren; und

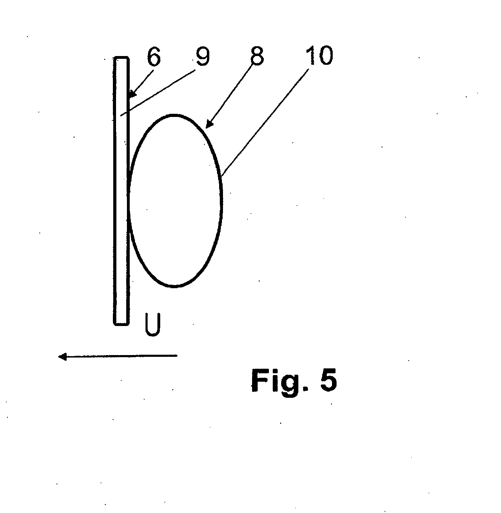

Fig. 5 Details eines Rührwerks mit einem Rührwerksbegleitheizungselement.

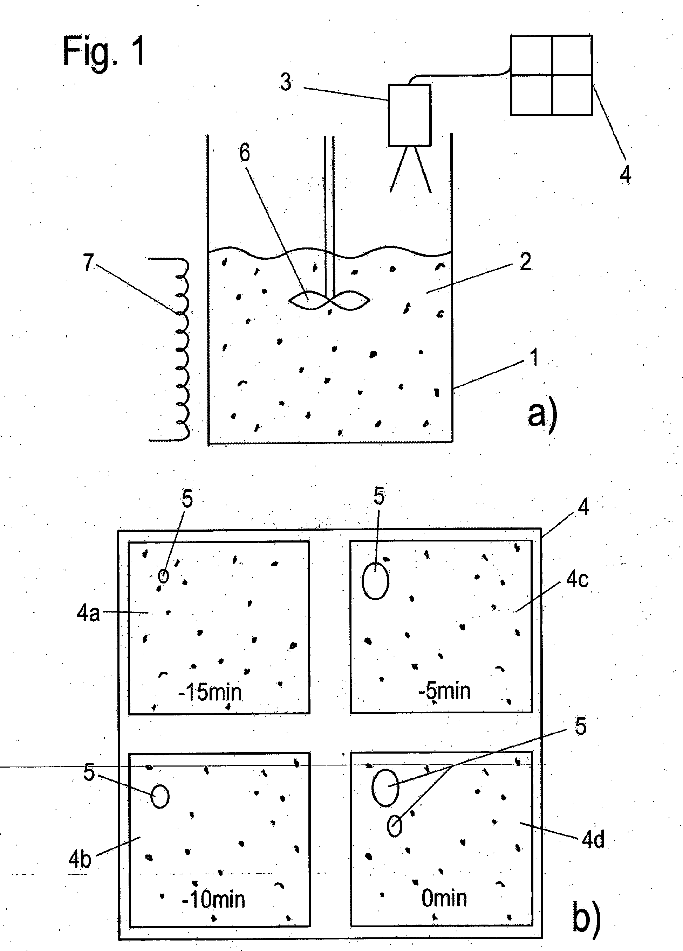

Fig. 1 zeigt eine Malaxiervorrichtung bzw. einen Malaxeur, die wenigstens einen Behälter (einen Tank) 1 aufweist, der jedenfalls teilweise mit einer zu malaxierende Fruchtmaische 2, hier einer Olivenmaische, befüllt ist. Der Behälter 1 weist ein erstens Heizelement 7 und eine Rühreinrichtung 6 auf. Vorzugsweise ist ferner eine sogenannte Rührwerksbegleitheizung bzw. ein bewegliches Rührwerksbegleitheizungselement 8 vorgesehen, bei welcher die Energiezufuhr in das Rührwerk integriert ist bzw. am Ort des Rührwerks vorgesehen ist und ggf. sogar mit diesem rotiert. Diese Variante ist besonders vorteilhaft. Das Heizelement 7 kann dagegen wenigstens ein Wandheizelement sein. Der Rührwerksquerschnitt, durch den das Heizmedium fließt, ist vorzugsweise ein Rohr oder Schlauch 10 des Rührwerksbegleitheizungselements (Fig. 10), der direkt an einem Rührpaddel 9 oder einem zusätzlichen Element 9 befestigt ist. Die mit dem Rührorgan 6 einhergehende, mit rotierende zusätzliche Platte 9 hat sowohl einen wärmetechnischen Effekt dadurch, dass die Heizfläche vergrößert wird, andererseits aber auch strömungsmechanisch betrachtet einer besseres "Schieben" der Masse erfolgt. Das ist sowohl während des Malaxierprozesses von Vorteil, als auch für das Entleeren. Das Rohr kann an der von der Bewegungsrichtung abgewandten Seite U befestigt oder ausgebildet werden.

Der Rücklauf kann durch die Drehachse des Rührwerkes erfolgen (hier nicht dargestellt).

Falls beide Heizungselemente 7 und 8 fluidisch miteinander verbunden sind, muss auf einen hydraulischen Ausgleich geachtet werden.

Oberhalb der Oberfläche der Maische 2 ist eine auf die Oberfläche der Maische gerichtete Kamera 3 (eine Filmkamera oder ein in Intervallen auslösender Fotoapparat) angeordnet, die derart am/im Behälter 1 angebracht und ausgerichtet ist, dass mit ihr Bilder der Maischeoberfläche aufgenommen werden können.

Die aufgenommenen Bilder werden auf einem mit der Kamera 3 drahtlos oder über ein Kabel verbundenen Bildschirm 4 bzw. Display ausgegeben bzw. angezeigt, wobei ein dem Display zugeordneter Rechner (nicht dargestellt) mit einer Auswertungseinrichtung (ein entsprechendes Programm) die Anzeige bzw. Ausgabe der Aufnahmen auf dem Bildschirm steuert.

Die Ausgabe der Aufnahmen erfolgt vorzugsweise derart, dass der Bildschirm in wenigstens zwei, drei oder mehr Teilbildschirme unterteilt wird, auf denen jeweils zeitlich versetzt zueinander aufgenommene Bilder der Maische ausgegeben werden. Dieser zeitliche Versatz kann durch die parallele Anzeige von mindestens zwei Bildern dargestellt werden, die aufgenommen wurden a) an der selben Position zum aktuellen Zeitpunkt und vor einem Zeitraum x (z.B. im Batch Betrieb) oder b) durch unterschiedliche Positionen in der Malaxeurgruppe (z.B. kontinuierlicher Betrieb) oder aber auch durch a) und b) gemeinsam. Vorzugsweise ist der Bildschirm in drei oder besonders bevorzugt vier Teilbildschirme unterteilt, so dass vier vorzugsweise zeitlich zueinander versetzt aufgenommene Bilder der Maische gleichzeitig auf dem Bildschirm angezeigt werden, so beispielsweise Bilder, die um einige Minuten, vorzugsweise 1 bis 10 min, insbesondere 3 - 7 min, min, vorzugsweise 5 min, versetzt zueinander aufgenommen worden sind. Alternativ können auch mehrere Bildschirme nebeneinander vorgesehen sein, auf denen die gleichzeitige Ausgabe der zeitlich und/oder örtlich versetzt getätigten Aufnahmen erfolgt.

Beispielhaft dargestellt ist, dass der Bildschirm 4 in vier Teilbildschirme 4a, 4b, 4c, 4d unterteilt ist, wobei Aufnahmen der Maische ausgegeben werden, die vor 15 min (Teilbildschirm 4a), vor 10 min (4b), vor 5 min (4c) aufgenommen worden sind bzw. den momentanen Zustand darstellen (4d). Dabei werden die Aufnahmen vorzugsweise in nochmals geringeren Intervallen, so minütlich aktualisiert.

Durch die Unterteilung des Bildschirms in Teilbildschirme bzw. Teilbereiche und die gleichzeitige Anzeige zeitlich und/oder örtlich versetzt aufgenommener Aufnahmen wird die Auswertung besonders einfach.

So ist in Fig. 1b gut zu erkennen, wie sich auf der Maische 2 beispielhaft über die letzten 15 min hinweg zunächst ein kleiner und dann größer werdender Öltropfen 5 ausgebildet hat, bis auf dem letzten Bild mehrere Öltropfen-Flächen zu erkennen sind.

Dies entspricht dem Moment, indem die Maische genügend aufgeschlossen ist, damit das Öl mit genügender Ausbeute abgetrennt werden kann. Andererseits ist der Zeitpunkt erreicht, an dem das Malaxieren abgebrochen werden sollte, damit sich die Ölqualität nicht verschlechtert.

Da im Malaxeur der Aufschluss vom Öl mehr oder weniger immer an derselben Ecke sichtbar wird, reicht in der Regel eine Kameraposition der Kamera 4 aus.

Die Auswertung der Aufnahmen kann entweder von einer Person erfolgen, welche den Bildschirm beobachtet oder aber alternativ auch rechnergesteuert mit einem optischen Auswertungsverfahren, welches die Größe der Ölflächen bestimmt (z.B. an der Färbung zu erkennen) mit der restlichen Oberfläche vergleicht und vorzugsweise auch die Veränderung dieser Flächen über die Zeit ermittelt.

Möglich ist insbesondere

- die Umwandlung eines photometrischen Messsignals zum aktuellen Zeitpunkt x und
- dessen Vergleich
- mit dem Signal aus einem oder zwei oder drei zurückliegenden Zeitintervallen (x-1t, x-2t, x-3 t); wobei t := eine Zeiteinheit von x Minuten, z.B. x = 2 oder 5 oder 10.

Dadurch wird eine Tendenz der Ölfreisetzung ableitbar. Ggf. kann diese Information auch dazu genutzt werden, steuernd oder regelnd die Maschinenparameter oder die Prozessparameter zu beeinflussen. So kann die gewonnene Information z.B. mit der Talkum- oder Wasserdosage, als auch mit der Manteltemperatur und/oder dem Rührwerksbegleitheizungselement 8 gekoppelt werden bzw. in deren Einstellung einfließen.

Es hat sich dabei herausgestellt, dass die Auswertung bei Malaxeuren, die im Batchverfahren betrieben werden, auf andere Weise erfolgen sollte als bei Malaxeuren, die im kontinuierlichen Verfahren betrieben werden.

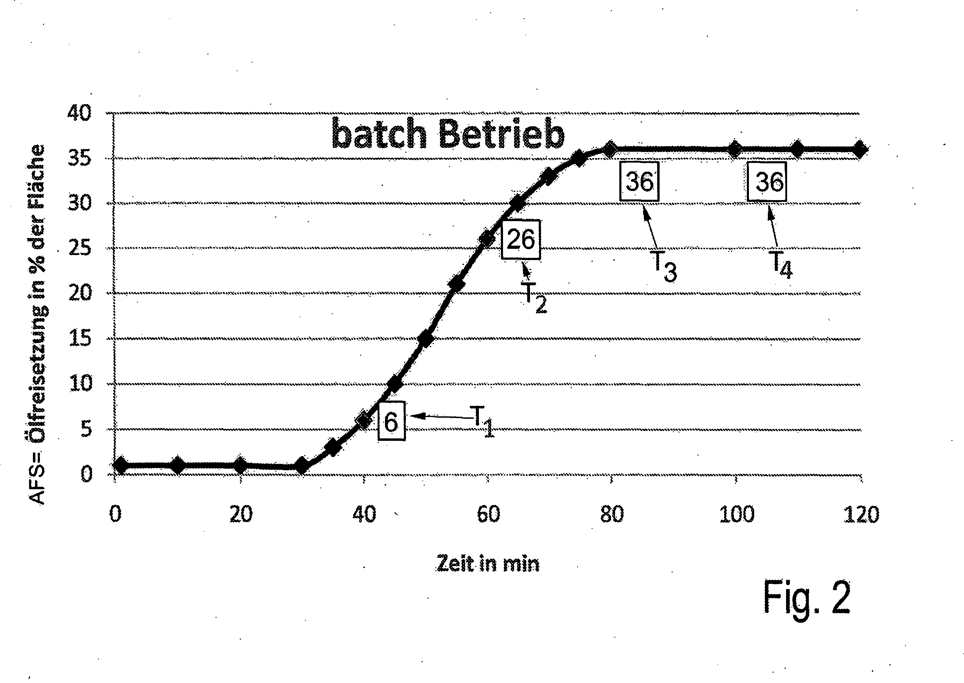

Zunächst sei nachfolgend der Batchbetrieb näher betrachtet. Hierzu wird auf das Diagramm der Fig. 2 verwiesen.

Im Batchbetrieb werden in dem Behälter 1 zeitversetzt zueiander Aufnahmen der Maischeoberfläche getätigt und ausgewertet.

In Fig. 2 ist die Ölfreisetzung auf der Oberfläche eines mit Olivenmaische befüllten Behälters 1 in Abhängigkeit von der Malaxierzeit t dargestellt. Hierzu wurden jeweils im Abstand von einigen Minuten Aufnahmen von der Maischeoberfläche 2 mit der Kamera 3 getätigt und es wurde jeweils in den Aufnahmen der Prozentanteil der Oberfläche bestimmt, welcher mit einem Ölfilm bedeckt ist.

Wie zu erkennen, liegt der Anteil der mit Öl bedeckten Fläche AFS an der Aufnahmefläche AS zunächst bei null. Er steigt dann nach ca. 30 min immer schneller an (siehe den Zeitpunkt T1: 6% der Aufnahmefläche mit Öl bedeckt) bis sich der Anstieg wieder verlangsamt (ungefähr bei T2 = 60 min; Anteil AFS: 26 %), bis nach T3 = 30 min ein Maximum AFS von 36% erreicht wird, über das der Anteil der Fläche AFS an der gesamten aufgenommenen Fläche nicht mehr weiteransteigt. So sind nach T4 = 100 min immer noch "nur" 36% der Aufnahmefläche mit Öl bedeckt.

Dis macht deutlich, dass beim Batchbetrieb der Ölaufschluss beendet ist bzw. auch genügend ist, wenn nach einem Anstieg des Anteils an Ölfläche zwischen dem letzten Messwert ($AFS_4$ = AFS(T4)) und dem vorletzen Messwert $AFS_3$ = AFS (T3) für die Ölfläche AFS im betrachteten Sektor AS (von der Kamera erfasste Fläche AS) kein Unterschied besteht. Es gilt dann:

$$AFS_4 - AFS_3 = 0 \qquad (1)$$

Ist diese Bedingung erfüllt, kann der Malaxiervorgang beendet und das Öl abgetrennt werden.

Sollte der Unterschied marginal sein,

$$\frac{AFS4-AFS3}{AFS4} \leq 5 \ldots 10\% \qquad (2)$$

wird deutlich, dass es sinnvoll ist, eine Veränderung von Prozeßparametern vorzunehmen (z.B. Rührgeschwindigkeit und/oder Temperatur und/oder Zeit)

Sollte der Unterschied dagegen groß sein,

$$\frac{AFS4 - AFS3}{AFS4} > 10\% \qquad (3)$$

ist mit ernsthaften Verlusten zu rechnen.

Im Beispiel der Fig. 2 liegt der optimale Zeitpunkt zum Abbrechen des Verfahrens bei 80 min (T3), da hiernach der Anteil an mit Öl bedeckter Fläche nicht mehr ansteigt. Würde man zu diesem Zeitpunkt das Malaxieren weiter fortsetzen, würde sich die Ölqualität zunehmend verschlechtern.

Vom Batch-Betrieb mit einem oder mehreren Behältern, in welche das Öl in einem Behälter verbleibt, bis der Malaxiervorgang beendet ist, ist der kontinuierliche Betrieb zu unterscheiden.

Im kontinuierlichen Betrieb sind in der Regel mehrere der Behälter hintereinander geschaltet, die fortlaufend von Maische durchströmt werden, wobei die Maische von Behälter zu Behälter weitergeleitet wird.

Insofern ist es vorteilhaft, hier nicht oder nicht nur zeitlich versetzt an einer Stelle von einem der Behälter Fotos aufzunehmen und auszuwerten sondern auch örtlich zueinander versetzte Fotos zu schießen, die verschiedenen zeitlichen Positionen entsprechend. Es bietet sind an, Fotos an wenigstens zwei Stellen aufzunehmen, so beispielsweise in einer Vorrichtung mit vier hintereinander geschalteten Behältern im dritten und im vierten Behälter. Sodann wird wieder der Anteil AFS an mit Öl bedeckter Fläche bestimmt.

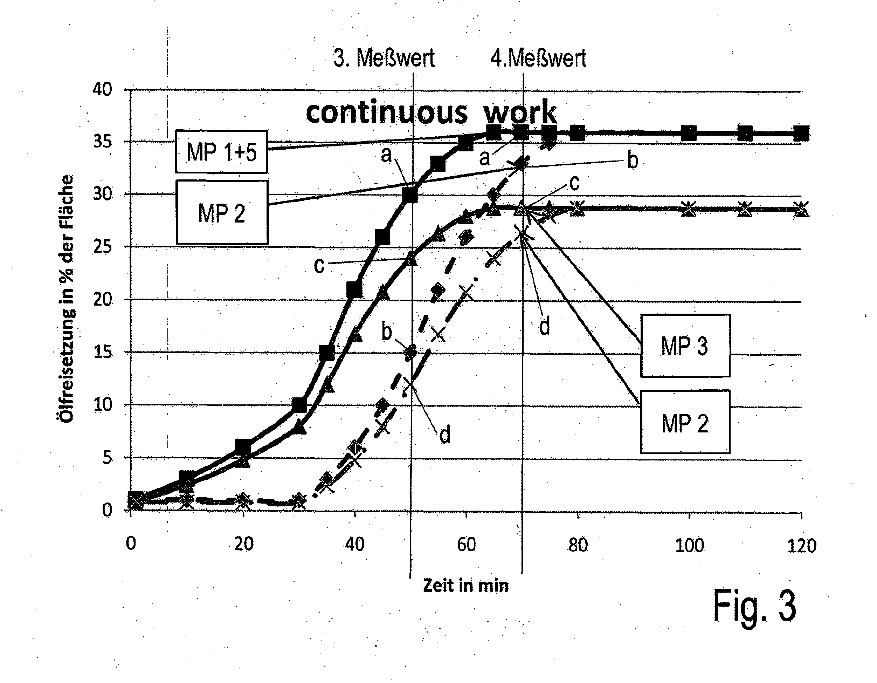

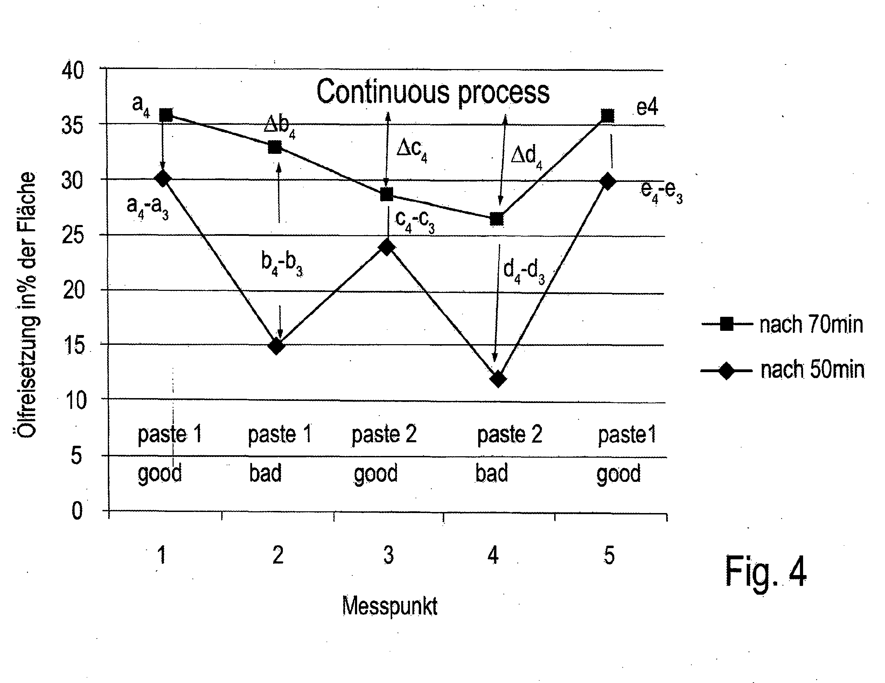

Diagramme, welche die Verhältnisse im kontinuierlichen Betrieb (continues work genannt) veranschaulichen, sind in Fig. 3 und 4 dargestellt).

Fig. 3 zeigt zunächst analog zu Fig. 2 Meßkurven von fünf verschiedenen malaxierten Maischen (paste MP1 bis paste MP5).

In Fig. 4 ist hierzu jeweils der nach 50 und nach 70 min erreichte Messwert aufgetragen.

Im jedem Fall wird deutlich, wann jeweils die maximal mögliche Ölausbeute erreicht ist.

Es wird zudem ergänzend - und dies ist ein Zusatznutzen der Erfindung - deutlich, dass lediglich in den Fällen 1 und 5 (Paste 1 und Paste 5) ein sehr guter Malaxiervorgang erreicht wurde, denn hier wird jeweils eine Ölfreisetzung beobachtet, bei der 36% der aufgenommenen Fläche AS mit Öl bedeckt sind (Fläche AFS).

In den übrigen Fällen liegt der Wert AFS dagegen auch nach 70 min noch deutlich niedriger bzw. zu niedrig. Für die Bedienperson ist dies ein Signal dafür, dass die Verfahrensparameter zu verändern sind oder dass sich die Olivensorte änderte.

Im kontinuierlichen Betrieb sind in der Regel mehrere Malaxeure hintereinander geschaltet und die Maische wird von Malaxeur zu Malaxeur weitergeleitet. Beispielsweise sind vier Malaxeure vorhanden. Dann können auch Aufnahmen aus den verschiedenen Malaxieren dargestellt werden, so beispielsweise jeweils aus dem ersten, dem zweiten, dem dritten und dem vierten Malaxeur.

Verglichen werden nach einer bevorzugten Ausgestaltung des erfindungsgemäßen Verfahrens jeweils die mit Öl bedeckten Anteile AFS der Flächen AS im vorletzten und letzten, z.B. im dritten und vierten, Malaxeur.

So kann es sinnvoll sein, den Messwert 4 immer im letzten Malaxeur je Zeiteinheit n zu messen. Beispielsweise wird der Messwert 3 einmal immer im vorletzten Malaxeur je Zeiteinheit n gemessen, z.B. in jeder Minute einmal. Alternativ kann der Messwert 3 im letzten z.B. näher am Einlauf, also zu Beginn des Malaxierens in diesem Becken, gewonnen werden.

Eine Auswertung kann beispielsweise zu folgenden Ergebnissen führen.

(4) $d(AFS) / dt = 0$

(5) $d(AFS) / dt < 0$

(6) $d(AFS) / dt > 0$

Diese Ergebnisse (welche die Veränderung der mit Öl bedeckten Fläche über die Zeit wiederspiegeln) entsprechen folgenden Bedingungen:

(4): konstant gute Prozessbedingungen. Keine Unterschiede in den zuletzt gemessen Flächen und den zuvor gemessenen Flächen.

(5): Aufschluss verschlechtert sich, die Fläche AFS wird kleiner.

(6): .Aufschluss wird besser, die Fläche AFS wird größer

Als weitere Auswertung ist das Diagramm nach Fig. 4 sinnvoll.

Hier wird vorzugsweise der letzte AFS Wert mit dem in der vorletzten Malaxeurposition verglichen, also bei z.B. einer 75 min Malaxierzeit der AFS Wert nach 70 min Malaxieren (AFS4) mit dem AFS Wert nach 50 Min (AFS 3).

Eine solche Auswertung kann zusätzliche Aussagen ermöglichen, so insbesondere die folgenden Aussagen:

AFS 4 - AFS 3 =< 10%, , guter Prozess

AFS 4- AFS 3 > 10% < 50% und gleichzeitig [Mittelwert der AFS 4 zuvor] Minus [AFS 4] > 0, jedoch < 10%, d.h. die Masse ist schlecht aufgeschlossen.

**Patentansprüche**

1. Verfahren zum Aufschließen einer Maische durch Malaxieren, insbesondere eine Olivenmaische, mit einer Malaxiervorrichtung, mit folgenden Schritten:

   a) in einem oder mehreren Behältern (1) werden Wärmebedingungen erzeugt, bei denen die fruchteigenen Enzyme und/oder zugesetzte Enzyme die Zellwände in der Maische (2) aufweichen,
   b) wobei die Maische (2) so bewegt wird, dass die Zellen aufgerissen werden,
   c) bis die frei gewordenen Öltröpfchen vorzugsweise eine kontinuierliche Phase und/oder eine Emulsion aus Wasser und Öl bilden,
   **dadurch gekennzeichnet, dass**
   d) wiederholt mit einer Kamera optische Aufnahmen der Maischeoberfläche getätigt werden;
   e) dass ein Vergleich aufeinander folgender Aufnahmen erfolgt;
   f) dass der Anteil an mit Öl bedeckter Fläche (AFS) in der Maische anhand des Vergleichs bestimmt wird und dass ferner
   g) eine ggf. eingetretene Veränderung des Anteils an mit Öl bedeckter Fläche (AFS) in Abhängigkeit von der Malaxierzeit bei dem Vergleich bestimmt wird,
   h) wobei die aufgenommenen Bilder auf wenigstens einem mit der Kamera (3) verbundenen Bildschirm (4) angezeigt werden, wobei der Bildschirm (4) in wenigstens zwei oder mehr Teilbildschirme unterteilt wird, auf denen gleichzeitig jeweils zeitlich und/oder örtlich versetzt zueinander aufgenommene Bilder der Oberfläche der Maische ausgegeben werden, oder wobei die aufgenommenen Bilder auf wenigstens zwei oder mehr Bildschirmen (4) angezeigt werden, wobei auf den Bildschirmen (4) gleichzeitig jeweils zeitlich und/oder örtlich versetzt zueinander aufgenommene Bilder der Oberfläche der Maische ausgegeben werden.

2. Verfahren nach Anspruch 1, **dadurch gekennzeichnet, dass** anhand der Auswertung steuernd oder regelnd in die Prozeßparametern des Malaxierens und/oder wenigstens einer oder mehrerer vorhergehender Prozesstufe(n) eingegriffen wird.

3. Verfahren nach Anspruch 1 oder 2, **dadurch gekennzeichnet, dass** anhand der Auswertung die Wärmezufuhr beim Malaxiervorgang gesteuert oder geregelt wird.

4. Verfahren nach Anspruch 3, **dadurch gekennzeichnet, dass** die Wärmezufuhr mittels wenigstens zwei verschiedener Heizungselemente gesteuert oder geregelt wird, insbesondere durch Veränderung der Heiztemperatur und/oder durch Veränderung der Durchflussmenge an Heizmedium.

5. Verfahren nach Anspruch 4, **dadurch gekennzeichnet, dass** das erste Heizelement ein Behälterheizungselement ist und/oder dass das zweite Heizelement ein Rührwerksbegleitheizungselement ist.

6. Verfahren nach einem der vorstehenden Ansprüche, **dadurch gekennzeichnet, dass** die Veränderung des Anteils an mit Öl bedeckter Fläche in Abhängigkeit von der Malaxierzeit mit einem optischen Auswertungsverfahren bestimmt wird.

7. Verfahren nach einem der vorstehenden Ansprüche, **dadurch gekennzeichnet, dass** aus der zeitlichen Veränderung des Anteils an mit Öl bedeckter Fläche der Zeitpunkt bestimmt wird, an dem das Malaxieren beendet wird.

8. Verfahren nach einem der vorstehenden Ansprüche, **dadurch gekennzeichnet, dass** der Bildschirm in vier Teilbildschirme unterteilt wird, so dass vier vorzugsweise zeitlich zueiander versetzt aufgenommene Bilder der Maische angezeigt werden.

**9.** Verfahren nach einem der Ansprüche 1 bis 8, **dadurch gekennzeichnet, dass** die Aufnahmen im Abstand von 1 bis 10 min getätigt und aktualisiert werden.

**10.** Verfahren nach einem der Ansprüche 1 bis 9, **dadurch gekennzeichnet, dass** der Zeitmoment zum Beenden des Malaxierens dadurch bestimmt wird, dass nach einem Anstieg des Anteils an mit Öl bedeckter Oberfläche zwischen dem letzten Messwert ($AFS_4$ = AFS(T4)) und dem vorletzen Messwert $AFS_3$ = AFS (T3) für die Ölfläche AFS im betrachteten Sektor AS (von der Kamera erfasste Fläche AS) gilt: 0,9 <= $AFS_3$/ $AFS_4$ < = 1.

**11.** Verfahren nach einem der Ansprüche 1 bis 10, **dadurch gekennzeichnet, dass** der Zeitmoment zum Beenden des Malaxierens dadurch bestimmt wird, dass nach einem Anstieg des Anteils an mit Öl bedeckter Oberfläche zwischen dem letzten Messwert ($AFS_4$ = AFS(T4)) und dem vorletzen Messwert $AFS_3$ = AFS (T3) für die Ölfläche AFS im betrachteten Sektor AS (von der Kamera erfasste Fläche AS) kein Unterschied besteht: so dass gilt: $AFS_4$-$AFS_3$ = 0.

**12.** Verfahren nach einem der Ansprüche 1 bis 11, **dadurch gekennzeichnet, dass** im Batchbetrieb der Zeitmoment zum Beenden des Malaxierens dadurch bestimmt wird, dass $AFS_4$-$AFS_3$ = 0 gilt.

**13.** Verfahren nach einem der Ansprüche 1 bis 12, **dadurch gekennzeichnet, dass** Im kontinuierlichen Betrieb mit einer oder mehreren Kameras örtlich und/oder zeitlich zueinander versetzt Fotos jedenfalls eines Teils der Oberfläche der Maische aufgenommen und ausgewertet werden.

## Claims

**1.** Process for digesting a mash by malaxing, in particular an olive mash, by a malaxing device, comprising the following steps:

a) producing heat conditions in one more containers (1) in which the enzymes of the fruit itself and/or added enzymes soften the cell walls in the mash (2),
b) the mash (2) being moved in such a way that the cells are torn open,
c) until the released oil droplets preferably form a continuous phase and/or an emulsion of water and oil,
**characterized in that**
d) optical images of the mash surface are repeatedly recorded with a camera;
e) **in that** a comparison of successive images is performed;
f) **in that** the proportion of surface covered with oil (AFS) in the mash is determined on the basis of the comparison and **in that** furthermore
g) a possibly occurring change in the proportion of surface covered with oil (AFS) in dependence on the malaxing time is determined in the comparison,
h) the images recorded being displayed on at least one screen (4) connected to the camera (3), the screen (4) being divided into at least two or more part-screens, on which images of the surface of the mash recorded at different times and/or different locations are output simultaneously, or the images recorded being displayed on at least two or more screens (4), images of the surface of the mash recorded at different times and/or different locations being output on the screens (4) simultaneously.

**2.** Process according to Claim 1, **characterized in that**, on the basis of the evaluation, open-loop or closed-loop control actions are taken to intervene in the process parameters of the malaxing and/or at least one or more preceding stage (s) of the process.

**3.** Process according to Claim 1 or 2, **characterized in that**, on the basis of the evaluation, the heat supply during the malaxing operation undergoes open-loop or closed-loop control.

**4.** Process according to Claim 3, **characterized in that** the heat supply undergoes open-loop or closed-loop control by means of at least two different heating elements, in particular by changing the heating temperature and/or by changing the flow rate of heating medium.

**5.** Process according to Claim 4, **characterized in that** the first heating element is a container heating element and/or **in that** the second heating element is an agitating unit trace heating element.

**6.** Process according to one of the preceding claims, **characterized in that** the change in the proportion of surface covered with oil in dependence on the malaxing time is determined by an optical method of evaluation.

**7.** Process according to one of the preceding claims, **characterized in that** the point in time at which the malaxing is ended is determined from the change over time in the proportion of surface covered with oil.

**8.** Process according to one of the preceding claims, **characterized in that** the screen is divided into four part-screens, so that four images of the mash, preferably recorded at different times, are displayed.

**9.** Process according to one of Claims 1 to 8, **characterized in that** the images are recorded and updated at intervals of 1 to 10 minutes.

**10.** Process according to one of Claims 1 to 9, **characterized in that** the moment in time for ending the malaxing is determined by the following applying after an increase in the proportion of surface covered with oil between the last measured value ($AFS_4$ = AFS(T4)) and the last-but-one measured value $AFS_3$ = AFS (T3) for the oil surface AFS in the sector being considered AS (area covered by the camera AS): $0.9 <= AFS_3/AFS_4 <= 1$.

**11.** Process according to one of Claims 1 to 10, **characterized in that** the moment in time for ending the malaxing is determined by there being no difference after an increase in the proportion of surface covered with oil between the last measured value ($AFS_4$ = AFS(T4)) and the last-but-one measured value $AFS_3$ = AFS (T3) for the oil surface AFS in the sector being considered AS (area covered by the camera AS): so that the following applies: $AFS_4-AFS_3 = 0$.

**12.** Process according to one of Claims 1 to 11, **characterized in that**, in batch mode, the moment in time for ending the malaxing is determined by $AFS_4-AFS_3 = 0$.

**13.** Process according to one of Claims 1 to 12, **characterized in that**, in continuous mode, photos at least of part of the surface of the mash are recorded and evaluated by one or more cameras at different locations and/or different times.

**Revendications**

**1.** Procédé permettant de désagréger un moût, en particulier un moût d'olives par malaxage comprenant les étapes suivantes :

a) dans un ou plusieurs récipients (1) on produit des conditions thermiques pour lesquelles les enzymes propres aux fruits et/ou des enzymes ajoutés ramollissent les parois cellulaires dans le moût (2),
b) le moût (2) est déplacé de sorte que les cellules se déchirent,
c) jusqu'à ce que les gouttelettes d'huile devenues libres forment de préférence une phase continue et/ou une émulsion d'eau et d'huile,
**caractérisé en ce que** :
d) on prend à répétition des prises de vue optiques de la surface du moût avec une caméra,
e) on effectue une comparaison de prises de vue successives,
f) la proportion de surface recouverte d'huile (AFS) dans le moût est déterminée à partir de la comparaison, et
g) la variation apparaissant le cas échéant de la proportion de la surface recouverte d'huile (AFS) en fonction du temps de malaxage est déterminée lors de la comparaison,
h) les images prises sont affichées sur au moins un écran (4) lié à la caméra (3), cet écran (4) étant subdivisé en au moins deux ou un plus grand nombre d'écrans partiels sur lesquels sont respectivement affichées simultanément des images de la surface du moût prises en étant respectivement décalées chronologiquement et/ou localement, ou, les images prises étant affichées sur au moins deux ou un plus grand nombre d'écrans (4), sur ces écrans (4) étant respectivement affichées simultanément des images de la surface du moût prises en étant décalées chronologiquement et/ou localement.

**2.** Procédé conforme à la revendication 1,
**caractérisé en ce qu'**
à partir de l'exploitation on agit par commande ou régulation sur les paramètres du malaxage et/ou sur au moins une ou plusieurs des étapes susmentionnées.

3. Procédé conforme à la revendication 1 ou 2, **caractérisé en ce qu'** à partir des résultats d'exploitation on commande ou régule l'introduction de chaleur dans le processus de malaxage.

4. Procédé conforme à la revendication 3, **caractérisé en ce que** l'introduction de chaleur est commandée ou régulée par l'intermédiaire d'au moins deux éléments de chauffage différents, en particulier en modifiant la température de chauffage et/ou en modifiant le flux d'agent caloporteur.

5. Procédé conforme à la revendication 4, **caractérisé en ce que** le premier élément chauffant est un élément de chauffage du récipient et/ou le second élément chauffant est un élément de chauffage conjugué de l'agitateur.

6. Procédé conforme à l'une des revendications précédentes, **caractérisé en ce que** les variations de la proportion de surface recouverte d'huile en fonction du temps de malaxage sont déterminées par un procédé d'exploitation optique.

7. Procédé conforme à l'une des revendications précédentes, **caractérisé en ce qu'** à partir des variations dans le temps de la proportion de la surface recouverte d'huile on détermine l'instant auquel le malaxage se termine.

8. Procédé conforme à l'une des revendications précédentes, **caractérisé en ce que** l'écran est subdivisé en quatre écrans partiels de sorte que quatre images du moût prises de préférence décalées dans le temps les unes par rapport aux autres puissent être affichées.

9. Procédé conforme à l'une des revendications 1 à 8, **caractérisé en ce que** les prises de vue sont effectuées et actualisées à intervalles de 1 à 10 minutes.

10. Procédé conforme à l'une des revendications 1 à 9, **caractérisé en ce que** l'instant d'achèvement du malaxage est déterminé de sorte que après une augmentation de la proportion de la surface recouverte d'huile entre la dernière valeur de mesure ($AFS_4$=AFS(T4)) et l'avant-dernière valeur de mesure $AFS_3$=AFS(T3) pour la surface d'huile AFS dans le secteur AS pris en considération
(surface AS détectée par la caméra) : on ait $0,9 < AFS_3/AFS_4 < 1$.

11. Procédé conforme à l'une des revendications 1 à 10, **caractérisé en ce que** l'instant d'achèvement du malaxage est déterminé de sorte que après une augmentation de la proportion de la surface recouverte d'huile entre la dernière valeur de mesure ($AFS_4$=AFS(T4) et l'avant-dernière valeur de mesure $AFS_3$=AFS(T3) pour la surface AFS, il n'y ait dans le secteur AS pris en considération (surface AS détectée par la caméra), aucune différence, et que l'on ait $AFS_4-AFS_3= 0$ ; $AFS_4-AFS_3=0$.

12. Procédé conforme à l'une des revendications 1 à 11, **caractérisé en ce que** dans un mode de fonctionnement discontinu, l'instant d'achèvement du malaxage est déterminé lorsque l'on a $AFS_4-AFS_3= 0$.

13. Procédé conforme à l'une des revendications 1 à 12, **caractérisé en ce que** dans le cas d'un mode de fonctionnement en continu, les photographie d'à chaque fois une partie de la surface du moût sont prises et exploitées avec une ou plusieurs caméras en étant décalées localement ou chronologiquement.

Fig. 1
3
4
6
7
2
1
a)
5
5
4
4a
4c
-15min
-5min
5
5
4b
4d
-10min
0min
b)

batch Betrieb
AFS= Ölfreisetzung in % der Fläche
0
5
10
15
20
25
30
35
40
Zeit in min
0
20
40
60
80
100
120
6
$T_1$
26
$T_2$
36
$T_3$
36
$T_4$

Fig. 2

3. Meßwert
4.Meßwert
continuous work
MP 1+5
MP 2
MP 3
MP 2
a
b
c
d
a
b
c
d
Ölfreisetzung in % der Fläche
Zeit in min
0
5
10
15
20
25
30
35
40
0
20
40
60
80
100
120

Fig. 3

Continuous process
Ölfreisetzung in% der Fläche
40
35
30
25
20
15
10
5
0
Messpunkt
1
2
3
4
5
good paste 1
bad paste 1
good paste 2
bad paste 2
good paste1
$a_4$
$a_4$-$a_3$
$\Delta b_4$
$b_4$-$b_3$
$\Delta c_4$
$c_4$-$c_3$
$\Delta d_4$
$d_4$-$d_3$
e4
$e_4$-$e_3$
nach 70min
nach 50min


Fig. 4

6
9
8
10
U

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- ES 2224855 A1
- ES 2329536 A1
- US 3589834 A1


### In der Beschreibung aufgeführte Nicht-Patentliteratur


- Are virgin olive oils obtained below 27C better than those produced at higher temperatures?. **BOSELLI E et al.** LEBENSMITTEL WISSENSCHAFT UND TECHNOLOGIE. ACADEMIC PRESS, 01. April 2009, vol. 42, 748-757